# EUROPEAN PATENT APPLICATION

(11) **EP 2 119 543 A2**
(43) Date of publication of application: **18.11.2009**
(21) Application number: 09005756.3
(22) Date of filing: 24.04.2009
(51) Int. Cl.: B28B 13/02

(54) **Tipping device intended for a mobile bucket for feeding a vibro-compressor press**

(30) Priority: 14.05.2008 ES 200801010 U
(71) Applicant: METALURGICA POYATOS S.A., 18220 ALBOLOTE, GRANADA (ES)
(72) Inventor: Poyatos Aguilera, Julio, 18220 Albolote Granada (ES)
(74) Representative: Isern-Jara, Nuria

(57) **Abstract**

Tipping device intended for a mobile bucket (1) formed by side walls and with its lower bottom opened to feed a vibro-compressor press and moveable along a surface wherein the product to be supplied rests and slides, comprising a meshed or reticular structure (3) housed inside the bucket (1) in an area close to the bottom thereof, capable of movement by means of driving means (7,8) so that the meshed or reticular structure (3) carries out an angular and back and forth movement causing an oscillating movement, in such a way that the product contained inside the bucket (1) can be moved additionally in the direction of the movement of the mobile bucket.

## Description

### OBJECT OF THE INVENTION

The present Patent application is related to a tipping device intended for a mobile bucket for feeding a vibro-compressor press that incorporates significant innovations and advantages compared to mobile buckets.

More specifically, the invention is connected to a tipping device intended for a mobile bucket form by side walls and an opened lower bottom for the supply of concrete to a vibro-compressor and moveable press along the surface where the product to be moved is resting.

### BACKGROUND TO THE INVENTION

Usually the vibro-compressor presses are intended to the manufacture of prefabricated concrete products with mould filling by means of the application of two types of concrete consist of two opened bottom feeder boxes (hereinafter called mobile buckets), one for each type of concrete. During the filling stage with the first layer it is important to make the penetration of the concrete easier through the holes in the mould which is achieved with strong shaking of the concrete mass on the mould. On the other hand, for the filling of the second layer said shaking is not necessary as the small volume of concrete necessary goes in with relative ease in the upper part of the holes in the mould. It is important that the concrete supplied for this second phase is as fresh as possible.

However, during the movement of advance of the box, the concrete contained inside thereof and which is moved and is in continual contact with the horizontal surface or trajectory from the point of loading to the point of supply, tends to form a mass in the rear part of said box caused by the inertia of the movement in the opposite direction in such a way that it does not guarantee concrete as fresh as would be desirable, hence its chemical-mechanical properties can be worsened.

None of the mobile buckets known by the applicant for the above stated purpose consider the existence of an invention that has the characteristics and advantages as described in the invention.

### DESCRIPTION OF THE INVENTION

This present invention has been developed for the purpose of providing a tipping device intended for a mobile bucket for feeding a vibro-compressor press that solves the above-mentioned disadvantages, in addition contributing other additional advantages that will become clear from the following description.

It is therefore the object of the invention to provide a tipping device intended for a mobile bucket, whose mobile bucket is of the type that is formed by side walls and where the lower bottom is opened to feed a vibro-compressor press, that is **characterised in that** it comprises a reticulated or meshed structure inside the bucket in an area that is close to the bottom thereof, capable of being moved by means of some driving means in such a way that the reticulated or meshed structure carries out an angular and back and forth movement forming an oscillating movement, so that the product contained inside of bucket can be moved in the direction of the movement of the mobile bucket, distributing the concrete in an substantially uniform manner along the surface defined inside the mobile bucket.

Thanks to these characteristics a mechanism is obtained that makes the filling of the mould easier likewise the replacement of the concrete held inside the mobile bucket during the consecutive loading/unloading operations on providing the possibility of additional movement to the concrete, thus preventing the build up of areas provided with an accumulation of concrete coming from previous loads and which have not been unloaded in the tipping stages to a mould. This tipping device is especially useful when the material to be transported is the concrete normally used on a base layer of concrete that usually gives characteristics of colour, resistance to abrasion, roughness, etc. as it is important to retain the properties in the best possible parameters.

Other advantageous characteristics and embodiments of this present invention will be shown in the dependent claims.

In a preferred embodiment of the tipping device of the invention, the driving means comprises at least a connecting rod linked to the meshed structure and joined to the moveable mobile bucket, which is to be displaced by an actuator, being a simple and straightforward construction in such a way that it has minimum maintenance for those moving parts.

Such an actuator can be a pneumatic or hydraulic piston of the commercially available types.

The driving means will at least include a connecting rod linked to a meshed structure and pivoted to the moveable mobile bucket.

Advantageously, the actuator is housed in the outer part of the mobile bucket in such a way that it cannot be affected by the concrete to be moved which could make the workings of the mechanism difficult.

Preferably, the meshed or reticulated structure is formed by a plurality of longitudinal struts and perpendicular cross members arranged in a horizontal position in regard to the plane or surface on which the mobile bucket is moved. In this way, the volume occupied by the mobile element of the device of the invention is the minimum possible and not affecting the concrete storage capacity inside the mobile bucket.

In addition, the starting up of the previously described driving means is synchronised with the advance movement of the mobile bucket by means of a control unit, in such a way that the workings of the tipping device is as effective as possible at the precise moment, thus giving all of the advantages that have been stated.

In an especially preferred embodiment of the invention, the driving means include two connecting rods linked to the meshed structure and pivoted to two opposing points of the mobile bucket, the two connecting rods being moveable by single actuators, connected each one to its corresponding connecting rod.

Other characteristics and advantages of the tipping device object of this present invention will become clear from a description of a preferred embodiment, but it is not exclusive, the drawings that are attached are by way of illustration but without being in any way limiting.

### BRIEF DESCRIPTION OF THE DRAWINGS

Figure 1. It is a diagrammatic elevation view of a mobile bucket provided with the tipping device according to the present invention; and
Figure 2. It is a top plan view of a mobile bucket with said tipping device; and
Figure 3. It is a diagrammatic elevation view of the mobile bucket wherein the meshed structure of the tipping device is in a second working position.

### DESCRIPTION OF A PREFERRED EMBODIMENT

As shown in a preferred embodiment of the invention, the tipping device is intended to be assembled in a mobile bucket referenced as number 1 with its lower bottom open and with a rectangular floor (which can be of a known type, therefore greater detail will not be gone into in the description) provided with some movement wheels 2 located at each one of the corners of the frame of the mobile bucket 1, and which is for the supply of concrete into a mould housed in a vibro-compressor press.

Making reference to the tipping device comprises a meshed or reticular structure 3 of a metallic material housed inside the stated mobile bucket 1, and in particular in the lower part next to the surface, this means, level with the floor on which the concrete to be supplied is supported or slides, whose meshed structure 3 is capable of movement by means of some mechanical driving means that will be described below. In this way, the meshed structure 3 is able to make an angular and back and forth movement defining an oscillating movement, in such a way that the product (concrete) contained inside the mobile bucket 1 can move in the same direction of movement as the mobile bucket 1 and consequently, reduce the effect of concrete agglomeration at specific points, especially at the rear part or rear wall of the mobile bucket 1 coming from previous mould filling processes.

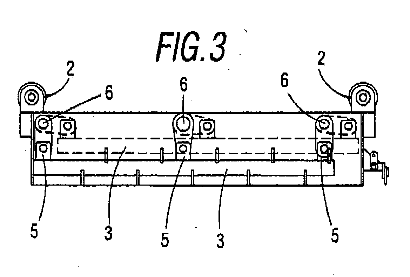

By means of broken lines figure 3 shows the meshed structure 3 in a second end position and upward position.

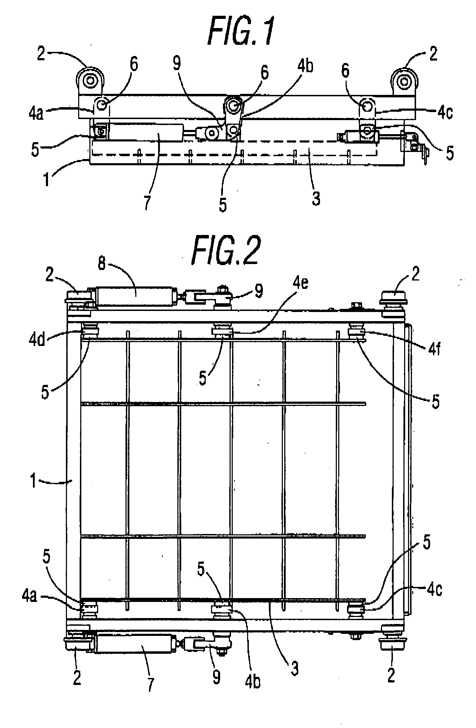

The stated driving means comprises a plurality of connecting rods 4a, 4b, 4c, 4d, 4e and 4f linked to the meshed structure 3 by means of some protruding wings 5 and pivoted to the mobile bucket 1 by means of axles 6, two of the connecting rods having been provided with a mechanical actuator that can either be a hydraulic or equally a pneumatic piston 7, 8. These pistons 7, 8 are linked to the corresponding connecting rods 4b, 4e by means of single arms 9 that are appreciably 'L' shaped to make the carrying out of the tipping movement easier. As can be seen more clearly in figure 2, the mechanical actuators are located on opposing sides and parallel to the mobile bucket 1 and on the outside.

Special mention must be made in regard to the starting up of the previously described driving means that it is synchronised by means of a control unit with the advance movement of the mobile bucket 1.

The details, shapes, sizes and other accessorial elements, likewise the materials used in the manufacture of the tipping device of the invention can be appropriately substituted by others that are technically equivalent and do not stray away from the essentiality of the invention or the scope defined by the claims that are included below.

## Claims

1. Tipping device intended for a mobile bucket formed by side walls and with its lower bottom opened to feed a vibro-compressor press and moveable along a surface wherein the product to be supplied rests and slides, **characterised in that** it comprises a meshed or reticular structure housed inside the bucket in an area close to the bottom thereof, capable of movement by means of driving means so that the meshed or reticular structure carries out an angular and back and forth movement causing an oscillating movement, in such a way that the product contained inside the bucket can be moved additionally in the direction of the movement of the mobile bucket.

2. Tipping device according to claim 1, **characterised in that** the driving means comprises at least one connecting rod linked to the meshed structure and linked to the moveable bucket by an actuator.

3. Tipping device according to claim 2, **characterised in that** the actuator consists of a pneumatic or hydraulic piston.

4. Tipping device according to claim 2, **characterised in that** the driving means include at least one free-movement connecting rod linked to the meshed or reticular structure and linked to the mobile moveable bucket.

5. Tipping device according to claim 3, **characterised in that** the actuator is housed outside the mobile bucket.

6. Tipping device according to claim 1, **characterised in that** the meshed or reticulated structure is formed by a plurality of longitudinal struts and perpendicular cross members arranged in a horizontal position with respect to the plane or surface on which the mobile bucket is moved.

7. Tipping device according to claims 1 and 2, **characterised in that** the starting up of the driving means is synchronised by means of a control unit with the advance of the mobile bucket.

8. Tipping device according to claim 2, **characterised in that** the driving means comprises two connecting rods linked to the meshed structure and pivoted to two opposing points of the mobile bucket, being said two connecting rods moveable by single actuators connected each one to its corresponding connecting rod.
